# EUROPÄISCHE PATENTSCHRIFT

(11) **EP 2 843 486 B1**
(45) Veröffentlichungstag und Bekanntmachung des Hinweises auf die Patenterteilung: **18.08.2021**
(21) Anmeldenummer: 14169606.2
(22) Anmeldetag: 23.05.2014
(51) Int. Cl.: G05B 19/042

(54) **Verfahren und Vorrichtung zum Synchronisieren einer Steuereinheit und mindestens einer zugeordneten Peripherieeinheit**
Method and apparatus for synchronising a control unit and at least one associated peripheral unit
Procédé et dispositif de synchronisation d'une unité de commande et d'au moins un périphérique installé

(30) Priorität: 30.08.2013 DE 102013217381; 12.09.2013 DE 102013218305
(43) Veröffentlichungstag der Anmeldung: 04.03.2015
(73) Patentinhaber: Dr. JOHANNES HEIDENHAIN GmbH, 83301 Traunreut (DE)
(72) Erfinder: Wastlhuber, Robert, 84518 Garching (DE)

(56) Entgegenhaltungen:
- EP-A2- 1 253 494
- EP-A2- 1 653 651

## Beschreibung

Die Erfindung betrifft ein Verfahren und eine Vorrichtung zum Synchronisieren einer Steuereinheit einerseits und mindestens einer zugeordneten, Aktoren und/oder Sensoren aufweisenden Peripherieeinheit andererseits, die über eine serielle Schnittstelle miteinander verbunden sind und hierüber Daten austauschen, nach dem Oberbegriff des Anspruchs 1 bzw. 9.

Danach sendet die Steuereinheit (mittels einer Sendeinheit) Daten an die mindestens eine Peripherieeinheit, die in der Peripherieeinheit (mittels eine Empfangseinheit) empfangen werden und die zum Betreiben der Aktoren bzw. Sensoren verarbeitet werden. Hierbei kann es sich um Daten, auch in Form von Befehlen, handeln, die in einen oder mehrere Aktoren geschrieben werden, um bestimmte Aktionen eines jeweiligen Aktors auszulösen, oder die das Auslesen aktueller Messwerte aus einem Sensor veranlassen sollen. Zur Durchführung dieser Verarbeitungsschritte kann aufseiten einer jeweiligen Peripherieeinheit eine Verarbeitungseinheit vorgesehen sein.

Bei der Steuereinheit kann es sich beispielsweise um eine Leiterplatte handeln, die eine für die digitale Regelung ausgebildete Ablaufsteuerung (Prozessor) aufweist; und die zugeordneten Peripherieeinheiten können als weitere Leiterplatten ausgeführt sein, die jeweils Sensoren (z. B. für die Strommessung) sowie Aktoren (z. B. in Form einer Leistungselektronik, gegebenenfalls mit PWM-Modulatoren) enthalten. Die Steuereinheit sowie die zugeordnete(n) Peripherieeinheit(en) sind zum Austausch von Daten (z.B. unter Verwendung einer 8b/10b-Codierung) über eine serielle Schnittstelle miteinander verbunden, beispielsweise in Form einer Duplex-Schnittstelle. Diese kann eine typische Bandbreite zwischen 100 Mbit/s und 200 Mbit/s aufweisen. Eine solche Anordnung ist beispielsweise aus der DE 10 2004 052 175 A1 bekannt.

Dabei werden die besagten Daten üblicherweise mit einem bestimmten Takt seriell von der Steuereinheit an die jeweilige Peripherieeinheit gesandt, wobei letztere durch Taktrückgewinnung den Takt für das Einlesen/Ausgeben der Daten und gegebenenfalls das Betreiben der Verarbeitungseinheit generieren kann.

Für eine hochgenaue Regelung von Prozessen unter Nutzung der in der Steuereinheit ausgebildeten Regeleinrichtung ist es erforderlich, dass die Verarbeitungseinheit der jeweiligen Peripherieeinheit bzw. allgemein die Verarbeitung von Daten aufseiten der Peripherieeinheit mit der Steuereinheit zeitlich synchronisiert ist. Hierzu ist es bekannt, sogenannte Synchronisationszeichen von der Steuereinheit zu einer jeweiligen Peripherieeinheit zu übertragen, und zwar entweder über eine zusätzliche Synchronisations-Leitung zwischen der Steuereinheit und einer jeweiligen Peripherieeinheit oder während einer Unterbrechung der Datenübertragung zwischen der Steuereinheit und einer jeweiligen Peripherieeinheit.

So schlägt beispielsweise die EP 1 253 494 A2 vor, die Kommunikation zwischen einer Steuereinheit und Peripherieeinheiten in äquidistanten Zyklen durchzuführen, die jeweils mit der Übertragung eines Synchronisationszeichens eingeleitet werden. Bei dieser Lösung ist man allerdings sowohl bei der Synchronisation, als auch bei der Kommunikation, an ein festes Zeitraster gebunden.

Der Erfindung liegt das Problem zugrunde, ein Verfahren und eine Vorrichtung zum Synchronisieren einer Steuereinheit und mindestens einer zugeordneten Peripherieeinheit der eingangsgenannten Art zu vereinfachen, ohne dass die Genauigkeit und Zuverlässigkeit der Synchronisierung beeinträchtigt wird.

Dieses Problem wird hinsichtlich des Verfahrens durch die Merkmale des Anspruchs 1 gelöst.

Danach ist bei einem gattungsgemäßen Verfahren weiter vorgesehen, dass mindestens ein Synchronisationszeichen aufseiten der Steuereinheit an eine erste Datenfolge eines von der Steuereinheit an eine zugeordnete Peripherieeinheit zu sendenden Datenstroms angehängt wird und dass das Senden einer zweiten, nach der ersten Datenfolge zu übertragenden zweiten Datenfolge zeitlich verzögert wird, so dass die zweite Datenfolge auf das Synchronisationszeichen folgend von der Steuereinheit an die Peripherieeinheit gesendet wird.

Die Erfindung beruht auf der Erkenntnis, dass sich ein Synchronisationszeichen definiert in einen Datenstrom von der Steuereinheit zu einer jeweiligen Peripherieeinheit einfügen lässt, ohne diesen zu unterbrechen. Dies wird erreicht, indem jener eine Datenstrom nach einer ersten Datenfolge, an welche das Synchronisationszeichen angehängt werden soll, (zumindest) für die Dauer jenes Synchronisationszeichens verzögert wird, so dass eine sich ursprünglich unmittelbar an jene erste Datenfolge anschließende zweite Datenfolge des Datenstromes nun nicht mehr unmittelbar nach der ersten Datenfolge sondern vielmehr (unmittelbar) auf das Synchronisationszeichen folgend von der Regeleinheit zur Peripherieeinheit übertragen wird. Konkret wird zur Verzögerung der zweiten Datenfolge aufseiten der Steuereinheit ein gegenüber dem an die Peripherieeinheit zu sendenden einen Datenstrom zeitlich verzögerter weiterer Datenstrom erzeugt, der zumindest hinsichtlich auf die erste Datenfolge folgender weiterer Datenfolgen eine Kopie des einen Datenstroms darstellt. Dabei entspricht die besagte zeitliche Verzögerung (zumindest) der zeitlichen Dauer des Synchronisationszeichens, und nach dem Anfügen des Synchronisationszeichens an die erste Datenfolge des einen Datenstroms werden nunmehr (anstelle weiterer Daten des einen Datenstroms) die Daten des verzögerten, weiteren Datenstroms an die Peripherieeinheit gesendet, und zwar derart, dass als erste Daten des weiteren Datenstroms die zweite Datenfolge (unmittelbar) nach dem Synchronisationszeichen übertragen wird.

Das Synchronisationszeichen wird dabei zu dem Zeitpunkt aufseiten der Steuereinheit in den Datenstrom eingefügt, der als Synchronisationszeitpunkt ausgewählt bzw. vorgegeben wurde, und zwar unabhängig von dem aktuellen Status der Kommunikation von der Steuereinheit zu einem jeweiligen Peripheriegerät. Denn da das erfindungsgemäße Verfahren keinerlei Unterbrechung der Kommunikation erfordert, sondern vielmehr lediglich eine minimale zeitliche Verzögerung des von der Steuereinheit an eine jeweilige Peripherieeinheit zu sendenden Datenstroms, kann das erfindungsgemäße Einfügen eines Synchronisationszeichens in den Datenstrom auch dann vorgenommen werden, wenn für eine hochdynamische Regelung der Datenaustausch zwischen der Steuereinheit und einer zugeordneten Peripherieeinheit nicht unterbrochen werden darf.

Bei dem Synchronisationszeichen kann es sich insbesondere um ein Datenwort, wie z. B. ein 8b10b k-Wort, handeln. Im Fall einer Übertragung von Daten von der Steuereinheit zu einem jeweiligen Peripheriegerät in aufeinanderfolgenden Rahmen kann ein solches Datenwort beispielsweise (zwischen einer ersten und einer zweiten, ursprünglich benachbarten Datenfolge) in einen der Datenrahmen eingefügt werden. Bei der ersten und zweiten Datenfolge, zwischen denen das Synchronisationszeichen eingefügt wird, kann es sich dabei ebenfalls jeweils um ein Datenwort handeln.

Im Ergebnis ermöglicht die erfindungsgemäße Lösung die Synchronisation zweier über eine serielle Schnittstelle miteinander verbundener elektronischer Baugruppen, ohne dass hierfür eine separate Verbindungsleitung zwischen den beiden Baugruppen oder eine Unterbrechung der laufenden Kommunikation (in Form eines Datenaustausches) zwischen den beiden Baugruppen erforderlich wäre. Vielmehr wird die Synchronisation der beiden Baugruppen unabhängig von der laufenden Kommunikation durchgeführt, indem lediglich (zu bestimmten Zeitpunkten) ein Synchronisationszeichen in den Datenstrom eingefügt wird.

Aufseiten einer Peripherieeinheit kann ein jeweiliges von der Steuereinheit an die Peripherieeinheit gesandtes Synchronisationszeichen genutzt werden, um zum Zweck der Synchronisierung der Peripherieeinheit mit der Steuereinheit einen Synchronisierungs-Impuls zu erzeugen.

Gemäß einer Ausführungsform der Erfindung wird das Synchronisationszeichen anschließend (auf Seiten der Peripherieeinheit) in dem Datenstrom durch ein Leer- bzw. Pausenzeichen ersetzt, also eine Folge von Daten, welche in der Peripherieeinheit keine Aktivität auslöst.

Nach einer anderen Ausführungsform der Erfindung wird in der Peripherieeinheit aus dem von der Steuereinheit eintreffenden Datenstrom ein (um die Dauer eines Synchronisationszeichens) zeitlich verzögerter Datenstrom erzeugt, der in der Peripherieeinheit zur Verarbeitung der eintreffenden Daten herangezogen wird, bis ein Synchronisationszeichen im Datenstrom auftritt und erkannt wird, um die Erzeugung eines Synchronisierungs-Impulses auszulösen. Anschließend (beginnend mit einer zweiten Datenfolge, welche in dem von der Steuereinheit ausgesandten Datenstrom auf das Synchronisationszeichen folgte) wird anstelle des verzögerten Datenstroms nunmehr der unverzögerte Datenstrom (also ein relativ zu dem erstgenannten Datenstrom vorverlagerter Datenstrom) in der Peripherieeinheit verarbeitet, so dass im Weiteren eine erste und zweite Datenfolge, welche nach dem Einfügen des Synchronisationszeichens zwischenzeitlich durch letzteres voneinander getrennt waren, unmittelbar aufeinanderfolgend verarbeitet werden können.

Nach einer weiteren Ausführungsform kann vorgesehen sein, dass das Synchronisationszeichen aufseiten der Peripherieeinheit wie ein Leer- bzw. Pausenzeichen behandelt wird, nachdem auf dessen Grundlage die Erzeugung eines Synchronisierungs-Impulses eingeleitet worden ist, um die zeitlichen Abläufe in der Peripherieeinheit mit denen in der Steuereinheit zu synchronisieren. Es ist dann nicht erforderlich, das Synchronisationszeichen aus dem Datenstrom herauszulösen bzw. durch ein Leer- bzw. Pausenzeichen zu ersetzen.

Das Einfügen oder Herauslösen eines Synchronisationszeichens in bzw. aus dem Datenstrom (aufseiten der Steuereinheit oder aufseiten einer Peripherieeinheit) sowie gegebenenfalls dessen Ersetzung durch ein Leer- bzw. Pausenzeichen kann dabei insbesondere mittels eines Multiplexers erfolgen.

Durch das abschnittsweise Verzögern des Datenstroms aufseiten der Steuereinheit bzw. das abschnittsweise relative Vorverlagern des Datenstromes aufseiten einer Peripherieeinheit nach dem Eintreffen und Erkennen bzw. Verarbeiten eines Synchronisationszeichens wird erreicht, dass einerseits beim Einfügen des Synchronisationszeichens keine zu übertragenden Daten verloren gehen und andererseits beim Herauslösen des Synchronisationszeichens keine Unterbrechung im Datenstrom auftritt. Zu der zweitgenannten Maßnahme bestehen dabei die vorstehend diskutierten Alternativen/Ergänzungen, wie etwa das Einfügen eines Leer- bzw. Pausenzeichens in den Datenstrom.

Nach dem Einfügen eines Synchronisationszeichens in den Datenstrom wird aufseiten der Steuereinheit zunächst (auf das Synchronisationszeichen folgend und beginnend mit der zweiten Datenfolge) eine zeitlich verzögerte Version des Datenstromes gesendet. Um den Datenstrom nicht mit jedem Einfügen eines Synchronisationszeichens weiter zu verzögern, erfolgt zu einem geeigneten Zeitpunkt nach dem Einfügen eines Synchronisationszeichens und der damit verbundenen Verzögerung des Datenstromes ein Rücksetzen des Datenstromes, so dass wieder der unverzögerte Datenstrom von der Steuereinheit zu einer jeweiligen Peripherieeinheit übertragen wird. Bei dem Rücksetzen des Datenstroms kann ein Leer- bzw. Pausenzeichen aufseiten der Steuereinheit aus dem Datenstrom herausgelöst werden. Dadurch folgt die zunächst unmittelbar nach diesem Leer- bzw. Pausenzeichen übertragene Datenfolge direkt auf die zunächst unmittelbar vor dem Leer- bzw. Pausenzeichen übertragene Datenfolge. Dies entspricht einem möglichen, vorstehend erläuterten Vorgehen beim Herauslösen des Synchronisationszeichens aus dem Datenstrom aufseiten einer Peripherieeinheit.

Das Herauslösen eines Leer- bzw. Pausenzeichens aus dem aufseiten der Steuereinheit erzeugten Datenstrom bedeutet keinen Verlust an Information, da die Leer- bzw. Pausenzeichen ohnehin keine Aktivität aufseiten einer Peripherieeinheit auslösen.

Wird während der Kommunikation zwischen der Steuereinheit und einer Peripherieeinheit zeitlich wiederkehrend, z. B. in bestimmten, vorgegebenen zeitlichen Abständen, jeweils ein Synchronisationszeichen von der Steuereinheit an die Peripherieeinheit übertragen, so stellt dies eine dauerhafte Synchronisierung dieser beiden Baugruppen auch dann sicher, wenn nach der Übertragung eines ersten Synchronisationszeichens, etwa als Folge einer zwischenzeitlichen Störung, die ursprüngliche Synchronisierung nicht beibehalten werden konnte. Eine wiederkehrende, insbesondere zyklische Synchronisation der Steuereinheit und einer jeweiligen Peripherieeinheit stellt somit eine Sicherheitsmaßnahme dar, um eine dauerhafte Synchronisierung auch im Fall zwischenzeitlich auftretender Störungen zu gewährleisten.

Sofern im Fall einer vorgesehenen zeitlich wiederkehrenden Übertragung von Synchronisationszeichen zeitweise keine Übertragung von Leer- bzw. Pausenzeichen erfolgen sollte, die das vorbeschriebene Rücksetzen der Steuereinheit, z.B. das durch Herauslösen oder Einfügen eines Leer- bzw. Pausenzeichens aus dem bzw. in den Datenstrom, erlauben würde, kann die Übertragung eines Synchronisationszeichens im Einzelfall unterdrückt werden.

Eine Vorrichtung zur Synchronisierung einer Steuereinheit und einer zugeordneten Peripherieeinheit, die über eine serielle Schnittstelle miteinander verbunden sind, ist durch die Merkmale des Anspruchs 9 charakterisiert. Vorteilhafte Ausgestaltungen dieser Vorrichtung ergeben sich aus den von Anspruch 9 abhängigen Ansprüchen.

Weitere Einzelheiten und Vorteile der Erfindung werden bei der nachfolgenden Beschreibung von Ausführungsbeispielen anhand der Figuren deutlich werden.

Es zeigen:
- Fig. 1: eine schematische Darstellung einer Steuereinheit und einer zugeordneten Peripherieeinheit, die über eine serielle Schnittstelle Daten austauschen;
- Fig. 2A: einen an der Steuereinheit erzeugten Datenstrom zur Übertragung an eine Peripherieeinheit;
- Fig. 2B: das Einfügen eines Synchronisationszeichens in den Datenstrom aus Figur 2A;
- Fig. 2C: eine konkrete Ausgestaltung des Vorgehens nach Figur 2B;
- Fig. 3A: den Datenstrom aus Figur 2A, wie er von einer Peripherieeinheit empfangen wird;
- Fig. 3B: das Herauslösen eines Synchronisationszeichens aus dem Datenstrom gemäß Figur 2B aufseiten einer Peripherieeinheit;
- Fig. 3C: eine Abwandlung des Vorgehens aus Figur 3B;
- Fig. 4: eine mögliche Ausgestaltung einer Sendeeinheit für die Steuereinheit aus Figur 1;
- Fig. 5A: eine mögliche Ausgestaltung einer Empfangseinheit für die Peripherieeinheit aus Figur 1;
- Fig. 5B: eine Abwandlung der Empfangseinheit aus Figur 5A;
- Fig. 6: eine schematische Darstellung einer Steuereinheit, an die mehrere Peripherieeinheiten angeschlossen sind.

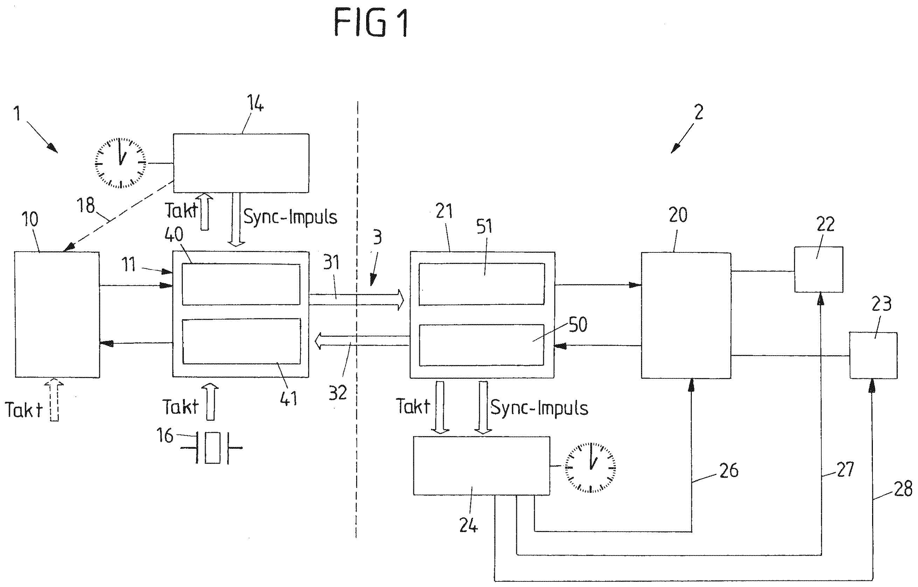

Figur 1 zeigt eine Steuereinheit 1, die über eine serielle Schnittstelle 3 mit einer Peripherieeinheit 2 verbunden ist. Bei der Steuereinheit 1 kann es sich um eine (z. B. auf einer Leiterplatte vorgesehene) elektronische Baugruppe handeln, die mindestens eine Ablaufsteuerung 10 (z.B. in Form eines Prozessors) enthält, die u. a. zur (digitalen) Regelung von Abläufen an der zugeordneten Peripherieeinheit 2 dient. Die Peripherieeinheit kann durch eine weitere, z. B. auf einer Leiterplatte vorgesehene, elektronische Baugruppe gebildet werden, welche etwa Aktoren 22, z. B. in Form einer Leistungselektronik mit PWM-Modulatoren, sowie Sensoren 23, z. B. für die Strommessung, enthält.

Die Schnittstelle 3 ist im Ausführungsbeispiel als eine Duplex-Schnittstelle ausgeführt, mit Datenkanälen 31, 32 zur Übertragung von Daten einerseits von der Steuereinheit 1 zu der Peripherieeinheit 2 und andererseits von der Peripherieeinheit 2 zu der Steuereinheit 1. Für den Austausch von Daten über die serielle Schnittstelle 3 ist dabei auf Seiten der Steuereinheit 1 und der Peripherieeinheit 2 jeweils eine Datenübertragungseinheit 11 bzw. 21 vorgesehen, welche wiederum jeweils eine Sendeeinheit 40 bzw. 50 und eine Empfangseinheit 41 bzw. 51 umfasst.

Die Steuereinheit 1 kann beispielsweise dazu dienen, über die Ablaufsteuerung 10 und unter Nutzung von Ausgangssignalen der Sensoren 23 an der Peripherieeinheit 2 den Betrieb der dortigen Aktoren 22 zu regeln. Hierzu tauschen die Steuereinheit 1 und die Peripherieeinheit 2 über die serielle Schnittstelle 3 Daten aus, wobei etwa von der Peripherieeinheit 2 Istwerte der von den Sensoren 23 gemessenen Ströme an die Steuereinheit 1 gesandt werden und wobei von der Steuereinheit 1 - unter Auswertung der von der Peripherieeinheit 2 empfangenen Signale - Daten an die Peripherieeinheit 2 gesandt werden, die einen definierten Betrieb der Aktoren 22 gewährleisten. Zum Schreiben von Daten in die Aktoren 22 bzw. Auslesen von Daten aus den Sensoren 23, gemäß den Befehlen, die im Datenstrom von der Steuereinheit 1 zur Peripherieeinheit 2 übertragen werden, weist letztere vorliegend eine Verarbeitungseinheit 20 auf.

Konkret kann die Steuereinheit 1 mit der Ablaufsteuerung 10 zur Steuerung eines Regelkreises dienen, indem sie einerseits Daten von einem Sensor, z.B. in Form eines Strommessgerätes, anfordert (Istwerte) und andererseits auf dieser Grundlage Sollwerte für einen Aktor, z.B. einen PWM-Modulator berechnet, und an die entsprechende Peripherieeinheit 2 ausgibt.

Dabei ist der Steuereinheit 1 ein Taktgenerator 16 zugeordnet, welcher einen Takt erzeugt, mit dem die Daten von der Steuereinheit 1 zur Peripherieeinheit 2 übertragen werden. Aufseiten der Peripherieeinheit 2 kann der entsprechende Takt zurück gewonnen werden und einer der Peripherieeinheit 2 zugeordneten Zyklussteuerung 24 zugeführt werden. Hierdurch lässt sich ein definiertes zeitliches Raster der Datenübertragung und -verarbeitung generieren. Der vom Taktgenerator 16 erzeugte Takt und/oder ein Steuersignal 18 einer mit dem Taktsignal beaufschlagten Zyklussteuerung 14 wird hierzu insbesondere der Ablaufsteuerung 10 der Steuereinheit 1 zugeführt.

Damit auf der Grundlage der von den Sensoren 23 gewonnenen Messwerte mittels der Steuereinheit 1 eine zuverlässige, definierte Regelung der Aktoren 22 an der Peripherieeinheit 2 erfolgen kann, ist eine zeitliche Synchronisierung der Datenverarbeitung an der Steuereinheit 1 einerseits und der Peripherieeinheit 2 andererseits vorgesehen. Hierzu werden von der Steuereinheit 1 Synchronisationszeichen, z. B. zeitlich wiederkehrend, an die Peripherieeinheit 2 gesandt. Diese synchronisieren das (durch den Taktgenerator 16 definierte) Zeitraster, in welchem aufseiten der Peripherieeinheit 2 Daten verarbeitet werden, etwa um den Betrieb der Aktoren 22 zu regeln bzw. zu steuern oder um das Auslesen von Messwerten aus den Sensoren 23 zu veranlassen, mit der Datenverarbeitung durch die Steuereinheit 1.

Zur Auslösung einer Synchronisierung erzeugt die der Steuereinheit 1 zugeordnete Zyklussteuerung 14 einen Synchronisierungs-Impuls, der die Übertragung eines Synchronisationszeichens im Datenstrom von der Steuereinheit 1 zu der Peripherieeinheit 2 veranlasst (und der hierzu an die Datenübertragungseinheit 11 ausgegeben wird). In der Peripherieeinheit 2 wird aus dem Synchronisationszeichen ein entsprechender Synchronisierungs-Impuls zurückgewonnen und der dortigen Zyklussteuerung 24 zugeführt.

Die Peripherieeinheit 2 kann, gesteuert durch die Steuereinheit 1, insbesondere deren Ablaufsteuerung 10, etwa wie folgt arbeiten: An der Peripherieeinheit 2 von der Steuereinheit 1 eintreffende Daten, darunter auch Befehle, werden von deren Datenübertragungseinheit 21 an die Verarbeitungseinheit 20 weitergeleitet. Umgekehrt empfängt die Datenübertragungseinheit 21 in der Peripherieeinheit 2 erzeugte Antwortdaten, etwa Messwerte der Sensoren 22, die wiederum an die Steuereinheit 1 übertragen werden sollen. Ferner extrahiert die Datenübertragungseinheit 21 aus dem von der Steuereinheit 1 eintreffenden Datenstrom das (vom Taktgenerator 16 erzeugte) Taktsignal sowie die (von der Zyklussteuerung 14 durch die Erzeugung eines Synchronisierungs-Impulses veranlassten) Synchronisationszeichen, aus welch letzteren in der Peripherieeinheit 2 wiederum Synchronisierungs-Impulse gewonnen werden. Sowohl das Taktsignal als auch die Synchronisierungs-Impulse werden der Zyklussteuerung 24 der Peripherieeinheit 2 zur Verfügung gestellt.

Mittels eines jeweiligen Synchronisierungs-Impulses wird die interne Uhr der Peripherieeinheit 2 mit derjenigen der Steuereinheit 1 synchronisiert, so dass im Ergebnis die (durch das an der Steuereinheit 1 erzeugte Taktsignal getaktete) Datenverarbeitung aufseiten der Steuereinheit und der Peripherieeinheit 2 zeitlich synchronisiert ist.

Die Zyklussteuerung 24 der Peripherieeinheit 2 erzeugt unter Nutzung des von der Steuereinheit 1 vorgegebenen Taktes verschiedene Steuersignale 26, 27, 28, die z. B. an die Verarbeitungseinheit 20 sowie die Aktoren 22 und Sensoren 23 weitergegeben werden. Auf diese Weise lassen sich die Abläufe in der Peripherieeinheit 2 zeitlich staffeln. So kann etwa zuerst einem Sensor 23 in Form eines Strommessers durch ein Signal 28 mitgeteilt werden, dass er einen Messwert zur Verfügung stellen soll; anschließend erhält die Verarbeitungseinheit 20 über ein Signal 26 den Befehl, jenen Messwert abzuholen und zur Datenübertragungseinheit 21 der Peripherieeinheit 2 zu übermitteln; usw.

Durch die Synchronisierung der zeitlichen Abläufe an der Steuereinheit 1 einerseits und der Peripherieeinheit 2 andererseits passt dabei das zeitliche Raster, in welchem mittels der Verarbeitungseinheit 20 die Abläufe in der Peripherieeinheit 2 gesteuert werden, definiert zu dem zeitlichen Raster, welches durch die Steuereinheit 1 verwendet wird.

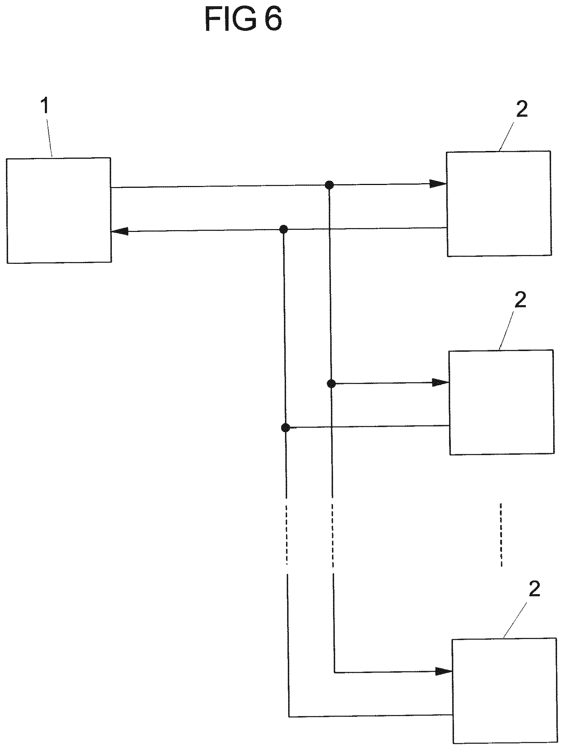

Betreibt man mittels einer Steuereinheit 1 mehrere hieran angeschlossene Peripherieeinheiten 2, wie in Figur 6 dargestellt, so lassen sich mit dem vorbeschriebenen Vorgehen die zeitlichen Abläufe zwischen der Steuereinheit 1 und einer jeden zugeordneten Peripherieeinheit 2 synchronisieren.

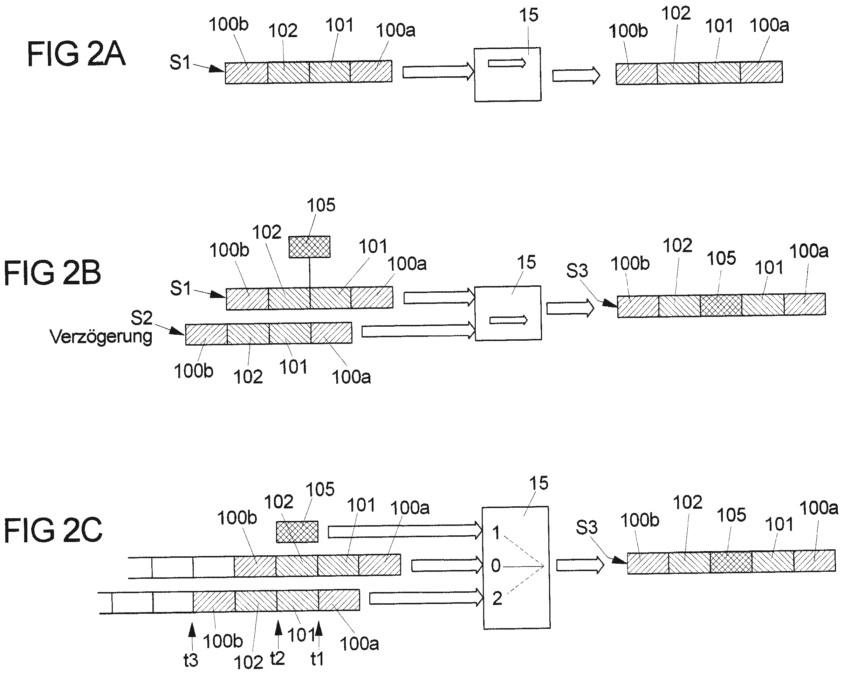

Einzelheiten zur Übertragung der Synchronisationszeichen von der Steuereinheit 1 an die Peripherieeinheit 2, und zwar ohne hierfür eine separate Verbindungsleitung vorzusehen und ohne die laufende Übertragung von Daten von der Steuereinheit 1 an die Peripherieeinheit 2 zu unterbrechen, werden nachfolgend anhand der Figuren 2A bis 3C beschrieben werden.

Figur 2A zeigt den Datenstrom S1 von der Steuereinheit 1 zu einer Peripherieeinheit 2 im Normalbetrieb und ohne Synchronisierung, und zwar am Beispiel des Sendens eines Datenrahmens vonseiten der Steuereinheit 1.

Der Datenrahmen (als ein Teil des Datenstroms S1) wird in Figur 2A repräsentiert durch vier Datenfolgen 100a, 101, 102 und 100b. Hiervon identifiziert die erste Datenfolge 100a den Beginn des Rahmens und die letzte Datenfolge 100b das Ende des Rahmens. Die dazwischen liegenden Datenfolgen 101 und 102 können beispielsweise jeweils Nutzdaten enthalten, die von der Steuereinheit 1 an die Peripherieeinheit 2 übertragen werden sollen, etwa für den Betrieb der dortigen Aktoren 22 oder zum Veranlassen des Auslesens von Daten aus den dortigen Sensoren 23, vergleiche Figur 1.

Ein jeweiliger Datenrahmen kann dabei insbesondere durch eine Mehrzahl Datenworte gebildet werden, zu denen die Zeichen 100a und 100b, welche den Beginn und das Ende eines Rahmens repräsentieren, sowie weitere Datenworte (Datenfolgen 101, 102) mit Nutzdaten, gehören können. Darüber hinaus können Datenworte in Form von Leer- bzw. Pausenzeichen definiert sein, die immer dann übertragen werden, wenn keine Aktivität an der Peripherieeinheit 2 ausgelöst werden soll.

Im Fall einer üblichen 8b/10b-Codierung des von der Steuereinheit 1 an die Peripherieeinheit 2 zu sendenden Datenstromes kann beispielsweise unter anderem jeweils ein 8b/10b k-Wort zur Identifizierung des Beginn eines Rahmens, zur Identifizierung des Ende eines Rahmens, zur Bildung eines Synchronisationszeichens sowie zur Definition eines Leer- bzw. Pausenzeichens ("Komma") vorgesehen sein.

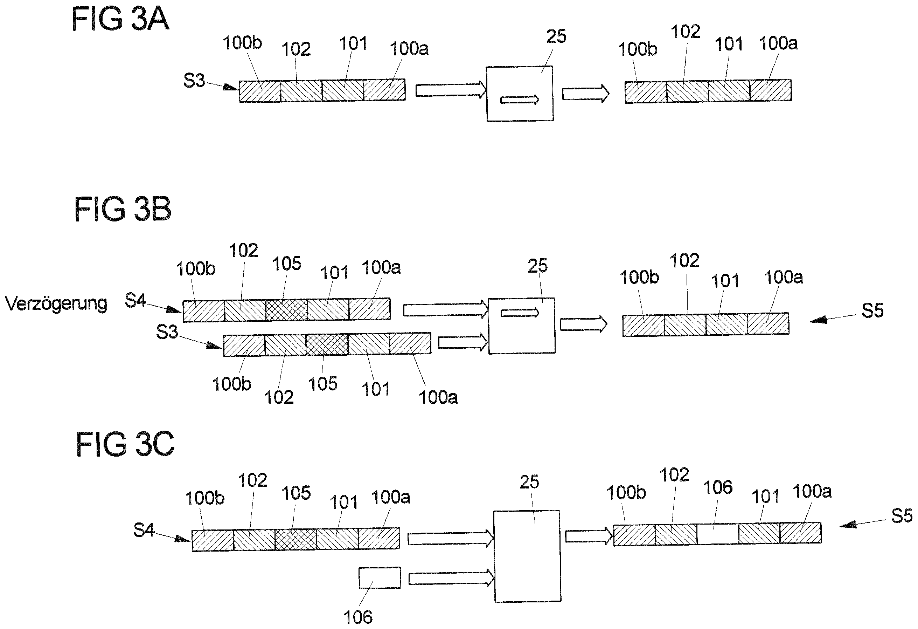

Der Datenstrom S1 passiert einen Multiplexer 15 aufseiten der Steuereinheit unverändert und wird in der ursprünglich generierten Form an die Peripherieeinheit 2 übertragen. Dort wird er in entsprechender Weise empfangen, wie in Figur 3A dargestellt.

Figur 2B zeigt demgegenüber eine Situation, in der aufseiten der Steuereinheit 1, vergleiche Figur 1, ein Synchronisationszeichen 105 in den Datenstrom S1 eingefügt werden soll, d. h., vorliegend beispielhaft in den vorstehend anhand Figur 2A erläuterten Datenrahmen. Dies erfolgt in einem Multiplexer 15 der Steuereinheit 1.

In jenem Multiplexer 15 wird das Synchronisationszeichen 105 an eine erste Datenfolge 101 des Datenstromes S1 angehängt.

Der Begriff "erste Datenfolge" bezeichnet dabei vorliegend eine beliebige Datenfolge des Datenstroms S1, die lediglich dadurch charakterisiert ist, dass die durch die Zyklussteuerung 14 ausgelöste Übertragung eines Synchronisationszeichens zu einem Zeitpunkt erfolgen soll, der unmittelbar auf das Senden jener ersten Datenfolge 101 folgt. Die entsprechende Datenfolge kann somit grundsätzlich - abhängig von dem Zeitpunkt ihrer Einfügung - an beliebiger Stelle in dem zu sendenden Datenstrom S1 liegen.

Dabei soll sichergestellt werden, dass die innerhalb des Datenstroms S1 ursprünglich unmittelbar nach der ersten Datenfolge 101 zu übertragende zweite Datenfolge 102 durch die Einfügung des Synchronisationszeichens 105 in den Datenstrom nicht verlorengeht, sondern vielmehr unmittelbar nach jenem Synchronisationszeichen 105 gesendet wird. Hierzu wird, wie in Figur 2B dargestellt, von dem zu übertragenden Datenstrom S1 eine Kopie hergestellt, die gegenüber dem ursprünglich zu sendenden Datenstrom S1 zeitlich (genau) um die Dauer des Synchronisationszeichens 105 verzögert ist. Diese verzögerte Kopie des ursprünglichen Datenstroms ist in Figur 2B in der zweiten, unteren Zeile dargestellt. Die einzelnen Daten jenes verzögerten Datenstromes S2 sind die gleichen wie diejenigen des unverzögerten Datenstromes S2; es liegt lediglich eine zeitliche Verzögerung um die Dauer des Synchronisationszeichens 105 vor.

Der verzögerte Datenstrom S2 wird - ebenso wie der unverzögerte Datenstrom S1 - dem Multiplexer 15 zugeführt. Sobald an die erste Datenfolge 101 des unverzögerten Datenstromes S1 das Synchronisationszeichen 105 angehängt worden ist, schaltet der Multiplexer 15 um, und gibt anstelle weiterer Daten dieses Datenstromes S1 nunmehr die Daten des verzögerten Datenstromes S2 aus. Hierdurch liegt am Ausgang des Multiplexers 15 ein Datenstrom S3 an, der zwischen der ersten Datenfolge 101 und der zweiten Datenfolge 102 das Synchronisationszeichen 105 enthält, wobei die vor dem Synchronisationszeichen 105 gesendeten Daten aus dem unverzögerten Datenstrom S1 stammen und die nach dem Synchronisationszeichen 105 gesendeten Daten aus dem verzögerten Datenstrom S2 stammen.

Das vorstehend anhand Figur 2B beschriebene Vorgehen sei nachfolgend anhand beispielhaft konkretisierter Umschaltvorgänge im Multiplexer 15 näher erläutert.

Der Grundzustand des Multiplexers 15 ist in Figur 2C mit "0" bezeichnet. In diesem Zustand gibt der Multiplexer 15 den unverzögerten Datenstrom S1 aus. Wird nun durch einen Synchronisierungs-Impuls der Zyklussteuerung 14 die Übertragung eines Synchronisationszeichens 105 angefordert, so wird der Multiplexer zum entsprechenden Zeitpunkt t₁ in den Zustand "1" umgeschaltet. In diesem Zustand gibt der Multiplexer 15 das Synchronisationszeichen 105 aus. Nach der Ausgabe des Synchronisationszeichens 105 wird ab dem entsprechenden Zeitpunkt t₂ der Multiplexer in den Zustand "2" geschaltet, in welchem er nunmehr den verzögerten Datenstrom S2 ausgibt.

Wird nachfolgend im unverzögerten Datenstrom ein Leer- bzw. Pausenzeichen erkannt, so kann dies genutzt werden, um zu dem entsprechenden Zeitpunkt t₃ den Multiplexer wieder in den Zustand "0" zu schalten, in welchem er den unverzögerten Datenstrom überträgt. Der hiermit einhergehende Verlust eines Leer- bzw. Pausenzeichens bei der Datenübertragung ist unproblematisch, da diese Zeichen ohnehin keine Aktion aufseiten der Peripherieeinheit 2 auslösen.

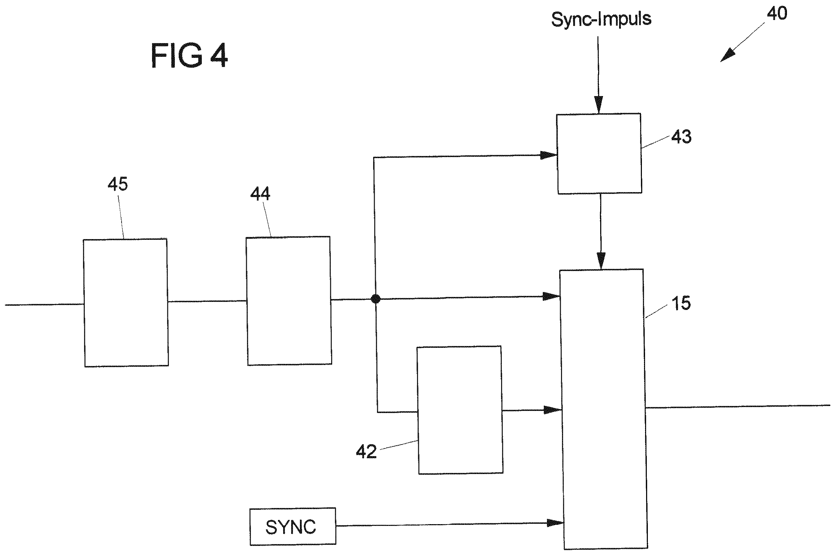

Die hier beschriebenen Schaltvorgänge können von einer Sendeablaufsteuerung initiiert werden, wie sie weiter unten anhand Figur 4 in einem Ausführungsbeispiel näher beschrieben werden wird.

Aufseiten der Peripherieeinheit 2 soll nun das Synchronisationszeichen 105, wie in Figur 3B und 3C dargestellt, wieder aus dem Datenstrom S3 herausgelöst werden, nachdem ersteres erkannt und damit die Erzeugung eines Synchronisierungsimpulses veranlasst worden ist, und zwar ohne dass hierbei eine Lücke (Unterbrechung) im Datenstrom entsteht. Eine erste Möglichkeit hierfür ist in Figur 3B gezeigt.

Danach wird in der Peripherieeinheit 2, entsprechend dem Vorgehen in der Steuereinheit 1, eine um die Dauer des Synchronisationszeichens 105 zeitlich verzögerte Kopie des eintreffenden Datenstromes S3 angelegt. Beide Datenströme S3, S4, sowohl der von der Steuereinheit 1 eintreffende Datenstrom als auch dessen zeitlich verzögerte Kopie werden gemäß Figur 3B einem Multiplexer 25 der Peripherieeinheit 2 zugeführt. Im Unterschied zur Figur 2B wird jedoch gemäß Figur 3B zunächst (bis zum Auftreten eines Synchronisationszeichens im Datenstrom) der verzögerte Datenstromes S4 von dem Multiplexer 25 ausgegeben. Mit dem Erkennen des Synchronisationszeichens 105 im verzögerten Datenstrom S4 schaltet der Multiplexer 25 um und an dessen Ausgang liegen nun nicht mehr die Daten des verzögerten Datenstroms S4 sondern vielmehr die Daten des von der Steuereinheit 1 eintreffenden, unverzögerten Datenstroms S3 an (welcher relativ zu dem verzögerten Datenstrom S4 zeitlich vorverlagert ist). Dementsprechend stammen aus dem gemäß Figur 3B am Ausgang des Multiplexers 25 anliegenden Datenstrom S5 die ersten Datenfolgen 100a, 101, welche vor dem Synchronisationszeichen 105 übertragen wurden, aus dem verzögerten Datenstrom S4, während die weiteren, daran anschließenden Daten 102, 100b, ... aus dem in der Steuereinheit 1 erzeugten, unverzögerten Datenstrom S3 stammen.

Im Ergebnis handelt es sich hierbei insgesamt am Ausgang des Multiplexers 25 um einen Datenstrom S5, der genau dem in der Steuereinheit 1 vor Einfügung des Synchronisationszeichens 105 erzeugten und von dort an die Peripherieeinheit 2 zu sendenden Datenstrom S1 entspricht.

Figur 3C zeigt eine Abwandlung des in Figur 3B dargestellten Ausführungsbeispiels. Danach wird mittels des Multiplexers 25 aufseiten der Peripherieeinheit 2 anstelle des herausgelösten Synchronisationszeichens 105 ein Leer- bzw. Pausenzeichen 106 in den empfangenen Datenstrom S4 eingefügt. Letzteres löst aufseiten der Peripherieeinheit 2 keine Aktivität aus, so dass der Informationsgehalt des Datenstromes hierdurch nicht verändert wird.

Beim Ausführungsbeispiel nach Figur 3C wird dem Multiplexer 25 der Peripherieeinheit 2 sonach lediglich ein Datenstrom (z.B. der verzögerte Datenstrom S4) sowie ein Leer- bzw. Pausenzeichen zugeführt und im Datenstrom S4 das Synchronisationszeichen 105 durch ein Leer- bzw. Pausenzeichen 106 ersetzt, um das Synchronisationszeichen 105 aus dem Datenstrom S4 herauszulösen.

Für eine mögliche konkrete Ausgestaltung des Multiplexers 25 der Peripherieeinheit 2 sowie der hiermit verbundenen Umschaltprozesse sei auf die entsprechende Beschreibung des Multiplexers 15 der Steuereinheit 2 anhand Figur 1 verwiesen.

Durch die Verzögerung des von der Steuereinheit 1 erzeugten Datenstromes S1 beim Einfügen eines Synchronisationszeichens in jenen Datenstrom S1 ist es erforderlich, den resultierenden Datenstrom zeitlich wieder zurückzusetzen, wenn nicht mit jedem Übertragen eines Synchronisationszeichens eine weitere zeitliche Verzögerung additiv hinzugefügt werden soll. Ein Rücksetzen des Datenstromes lässt sich in einfacher Weise erreichen, indem aus dem an der Steuereinheit 1 erzeugten Datenstrom ein Leer- bzw. Pausenzeichen herausgelöst wird.

Konkret lässt sich dies in der Weise umsetzen, dass nach der Ausgabe eines Synchronisationszeichens durch den Multiplexer 15 das nächstfolgende Leer- bzw. Pausenzeichen zum Zurücksetzen des Datenstroms genutzt werden kann. Wird nach der Ausgabe eines Synchronisationszeichens durch den Multiplexer 15 ein Leer- bzw. Pausenzeichen in dem dem Multiplexer 15 zugeführten Datenstrom erkannt, so wird der Multiplexer 15 so um- bzw. zurückgeschaltet, dass er nunmehr wieder den unverzögerten Datenstrom ausgibt. Hierbei wird das betreffende Leer- bzw. Pausenzeichen nicht mitübertragen, was aber keinen Informationsverlust darstellt, da ein solches Zeichen aufseiten der jeweiligen Peripherieeinheit 2 ohnehin keine Aktion auslöst.

In entsprechender Weise wie das vorbeschriebene Zurücksetzen des Multiplexers 15 der Steuereinheit 1 kann das Zurücksetzen des Multiplexers 25 einer Peripherieeinheit 2 erfolgen, nachdem dieser ein Synchronisationszeichen empfangen hat. In diesem Fall wird der Multiplexer 25 so umgeschaltet, dass er nunmehr wieder den verzögerten Datenstrom statt des unverzögerten Datenstroms überträgt. Dies korrespondiert mit dem Hinzufügen eines Leer- bzw. Pausenzeichens in den entsprechenden Datenstrom, was wiederum keine Änderung des Informationsgehaltes darstellt, da Leer- bzw. Pausenzeichen keine Aktionen in der Peripherieeinheit 2 auslösen.

Figur 4 zeigt einen möglichen Aufbau einer Sendeeinheit 40 der Steuereinheit 1. Dabei wird anhand Figur 4 insbesondere auch eine Möglichkeit der Integration des Multiplexers 15 in die Steuereinheit 1 deutlich.

Gemäß Figur 4 ist der Multiplexer 15 der Sendeeinheit 40 zugeordnet. Dem Multiplexer 15 ist eine Verzögerungseinheit 42 vorgeschaltet, mittels der ein gegenüber dem ursprünglich erzeugten Datenstrom verzögerter Datenstrom generiert werden kann. Zur Erzeugung des ursprünglichen Datenstromes dient ein Konverter 44, der im Ausführungsbeispiel als ein 8b10b-Konverter ausgeführt sein und der die zu sendenden Daten aus einem Zwischenspeicher 45 erhält, welcher beispielsweise als ein FIFO-Speicher ausgeführt sein kann.

Dem Multiplexer 15 werden sowohl der vom Konverter 44 erzeugte Datenstrom als auch ein gegenüber diesem Datenstrom mittels der Verzögerungseinheit 42 verzögerter Datenstrom zugeführt. Weiterhin kann dem Multiplexer 15 ein Synchronisationszeichen SYNC zugeführt werden, das, wie anhand Figur 1 beschrieben, aufgrund eines von einer Zyklussteuerung 14 abgegebenen Synchronisierungs-Impulses bereitgestellt wird.

Zur Steuerung der Abläufe in der Sendeeinheit 40 dient eine übergeordnete Sendeablaufsteuerung 43, welche steuert, welche Daten jeweils von dem Multiplexer 15 ausgegeben werden. Hierzu werden der Sendeablaufsteuerung 43 insbesondere auch die von der Zyklussteuerung 14 abgegebenen Synchronisierungs-Impulse zugeführt.

Im Betrieb der Steuereinheit 1 schreibt deren zentrale Ablaufsteuerung 10 Daten und insbesondere Befehle in den Zwischenspeicher 45 der Sendeeinheit 40, aus denen der Konverter 44 einen Datenstrom erzeugt. Dies geschieht in der Regel in der Weise, dass die aus dem Zwischenspeicher 45 erhaltenen Daten/Befehle in einen Datenstrom eingefügt werden, der in Abwesenheit von Daten/Befehlen aus Leer- bzw. Pausenzeichen besteht.

Trifft bei der Sendeablaufsteuerung 43 ein Synchronisierungs-Impuls ein, so schaltet erstere den Multiplexer 15 (nachdem das aktuell zu übertragende Zeichen vollständig ausgegeben worden ist) so um, dass anstelle des ursprünglichen Datenstromes das entsprechende Synchronisationszeichen übertragen wird. Anschließend erfolgt eine Umschaltung auf den verzögerten Datenstrom, wie vorstehend anhand der Figuren 2B und 2C beschrieben.

Erkennt die Sendeablaufsteuerung 43 nach der Übertragung eines Synchronisationszeichens ein Leer- bzw. Pausenzeichen in dem verzögerten Datenstrom, so schaltet sie den Multiplexer 15 zurück, so dass dieser wieder den ursprünglichen Datenstrom überträgt, wobei lediglich das Leer- bzw. Pausenzeichen in dem Datenstrom verloren geht.

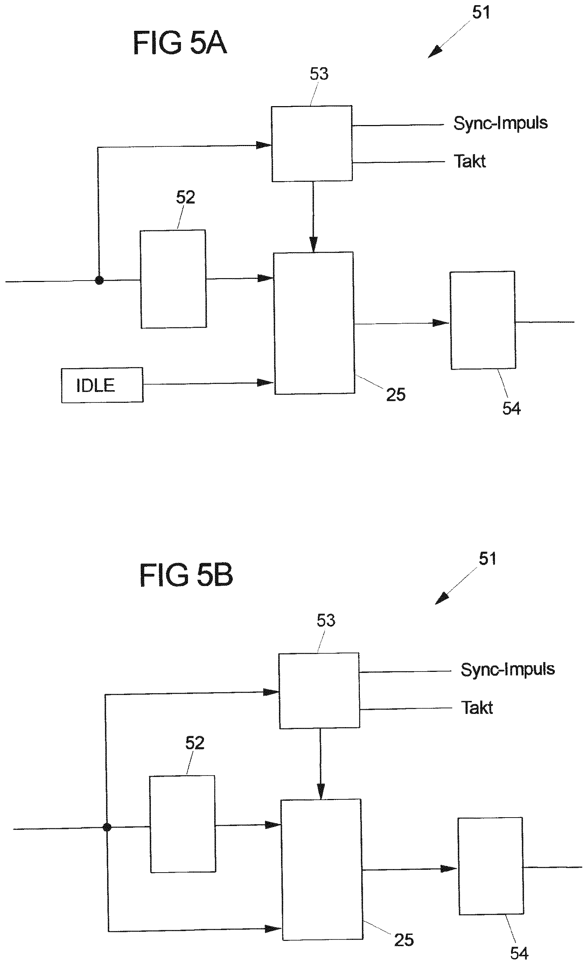

Figur 5A zeigt einen möglichen Aufbau einer Empfangseinheit 51 der Peripherieeinheit 2 aus Figur 1, welcher geeignet ist zur Ausführung des Verfahrens nach Figur 3C. Daran wird insbesondere auch eine Möglichkeit der Integration eines Multiplexers 25 in die Peripherieeinheit 2 deutlich. Dem Multiplexer 25 ist eine Verzögerungseinheit 52 vorgeschaltet, die aus dem von der Sendeeinheit 1 eintreffenden Datenstrom einen verzögerten Datenstrom erzeugt und an den Multiplexer 25 abgibt. Weiterhin können dem Multiplexer 25 einzelne Leer- bzw. Pausenzeichen "IDLE" zugeführt werden.

Zur Steuerung der Abläufe in der Empfangseinheit 51 dient eine Empfangsablaufsteuerung 53. Diese kann zudem aus dem von der Sendeeinheit 1 eintreffenden Datenstrom das Taktsignal extrahieren. Weiterhin generiert die Empfangsablaufsteuerung beim Eintreffen und Erkennen eines Synchronisationszeichens (als Bestandteil des von der Sendeeinheit 1 übertragenen Datenstroms) einen Synchronisierungs-Impuls.

Dem Multiplexer 25 ist ein Konverter 54 nachgeordnet, der den (im Ausführungsbeispiel 8b10b-kodierten) Datenstrom dekodiert und zur weiteren Verarbeitung an die Verarbeitungseinheit 20 der Peripherieeinheit 2, vergleiche Figur 1, ausgibt. Ergänzend kann dem Konverter 54 noch ein Zwischenspeicher zugeordnet sein.

Die Verzögerungseinheit 52 ist bei dem Ausführungsbeispiel der Figur 5A deshalb vorgesehen, weil zum Austausch eines Synchronisationszeichens gegen ein Leer- bzw. Pausenzeichen, wie vorstehend anhand Figur 3C beschrieben, das Eintreffen eines Synchronisationszeichens zunächst erkannt werden muss, bevor der Multiplexer 25 umgeschaltet werden kann. Hierzu ist der Empfangsablaufsteuerung 53 der von der Sendeeinheit 1 eintreffende Datenstrom unmittelbar zugeführt, also ohne Verzögerung durch die Verzögerungseinheit 52. In einer alternativen Ausführungsform, gemäß der der Konverter 54 ein jeweiliges Synchronisationszeichen einfach ignoriert bzw. wie ein Leer- bzw. Pausenzeichen behandelt, könnte auf die Verzögerungseinheit 52 und dazu auch auf den Multiplexer 25 verzichtet werden. Die Empfangseinheit 51 bestünde dann im Wesentlichen aus dem Konverter 54 als zentralem Bestandteil sowie einer Empfangsablaufsteuerung 53.

Figur 5B zeigt ein weiteres Ausführungsbeispiel einer Empfangseinheit 51 für die Peripherieeinheit 2 aus Figur 1, und zwar hier in einer Ausgestaltung zur Ausführung des in Figur 3B dargestellten Verfahrens.

Auch hier ist der Multiplexer 25 der Peripherieeinheit 2 der Empfangseinheit 51 zugeordnet; und dem Multiplexer ist wiederum eine Verzögerungseinheit 52 vorgeschaltet.

Im Ausführungsbeispiel der Figur 5B wird dem Multiplexer 25 der von der Steuereinheit 1 übertragene Datenstrom einerseits über die Verzögerungseinheit 52 in verzögerter Form und andererseits unmittelbar in unverzögerter Form zugeführt. Vor der Übertragung eines Synchronisationszeichens gibt der Multiplexer 25, wie anhand Figur 3B beschrieben, den verzögerten Datenstrom aus. Erkennt die Empfangsablaufsteuerung 53 in dem eintreffenden, unverzögerten Datenstrom ein Synchronisationszeichen, so schaltet sie den Multiplexer 25 so um, dass er nunmehr den unverzögerten Datenstrom überträgt. Gleichzeitig erzeugt die Empfangsablaufsteuerung 53 einen Synchronisierungs-Impuls.

Zur weiteren Verarbeitung des vom Multiplexer 25 ausgegebenen Datenstroms kann diesem wiederum ein Konverter 54 nachgeschaltet sein.

Erkennt die Empfangsablaufsteuerung 53 nach der Ausgabe eines Synchronisationszeichens durch den Multiplexer 25 ein Leer- bzw. Pausenzeichen im eintreffenden Datenstrom, so schaltet sie den Multiplexer 25 so um, dass dieser wieder den verzögerten Datenstrom ausgibt. Dies bewirkt, dass das entsprechende Leer- bzw. Pausenzeichen ein zweites Mal übertragen wird - ohne Änderung des Informationsgehaltes im Datenstrom.

## Patentansprüche

1. Verfahren zum Synchronisieren einer Steuereinheit (1) und mindestens einer Aktoren und/oder Sensoren aufweisenden Peripherieeinheit (2), die über eine serielle Schnittstelle (3) Daten miteinander austauschen, wobei die Steuereinheit (1) Daten an die mindestens eine Peripherieeinheit (2) sendet, die in der Peripherieeinheit (2) zum Betreiben der Aktoren (22) und/oder Sensoren (23) verarbeitet werden,
und wobei zur Synchronisierung mindestens ein Synchronisationszeichen (105) von der Steuereinheit (1) zu der Peripherieeinheit (2) übertragen wird,
**dadurch gekennzeichnet,**
**dass** das Synchronisationszeichen (105) aufseiten der Steuereinheit (1) an eine erste Datenfolge (101) eines von der Steuereinheit (1) an die Peripherieeinheit (2) zu sendenden Datenstroms angefügt wird und dass aufseiten der Steuereinheit (1) das Senden einer nach der ersten Datenfolge (101) zu übertragenden zweiten Datenfolge (102) des zu sendenden Datenstroms zeitlich verzögert wird, so dass die zweite Datenfolge (102) auf das Synchronisationszeichen (105) folgend von der Steuereinheit (1) an die Peripherieeinheit (2) gesandt wird und dass zur Verzögerung der zweiten Datenfolge (102) aufseiten der Steuereinheit (1) ein gegenüber dem an die Peripherieeinheit (2) zu sendenden einen Datenstrom zeitlich verzögerter weiterer Datenstrom erzeugt wird, der zumindest hinsichtlich auf die erste Datenfolge (101) folgender Datenfolgen (102, 100b) eine Kopie des einen Datenstroms darstellt, wobei die zeitliche Verzögerung des weiteren Datenstroms der Dauer des Synchronisationszeichens (105) entspricht und wobei nach dem Anfügen des Synchronisationszeichen (105) an die erste Datenfolge (101) des einen Datenstroms nunmehr die Daten des verzögerten, weiteren Datenstroms beginnend mit der zweiten Datenfolge (102) - anstelle der Daten des einen Datenstroms - an die Peripherieeinheit (2) gesandt werden.

2. Verfahren nach Anspruch 1, **dadurch gekennzeichnet, dass** vor dem Einfügen des Synchronisationszeichens (105) in den Datenstrom die erste und zweite Datenfolge (101, 102) unmittelbar aufeinander folgen.

3. Verfahren nach einem der vorhergehenden Ansprüche, **dadurch gekennzeichnet, dass** das Synchronisationszeichen (105) aufseiten der Peripherieeinheit (2) aus dem Datenstrom herausgelöst wird, nachdem auf Grundlage des Synchronisationszeichens (105) ein Synchronisierungs-Impuls erzeugt worden ist, um die zeitlichen Abläufe in der Peripherieeinheit (2) mit denen in der Steuereinheit (1) zu synchronisieren.

4. Verfahren nach Anspruch 3, **dadurch gekennzeichnet, dass** aufseiten der Peripherieeinheit (2) anstelle des Synchronisationszeichens (105) ein anderes Zeichen, insbesondere ein Pausenzeichen (106), in den Datenstrom eingefügt wird.

5. Verfahren nach Anspruch 3, **dadurch gekennzeichnet, dass** aufseiten der Peripherieeinheit (2) die im Datenstrom auf das Synchronisationszeichen (105) folgende zweite Datenfolge (102) relativ zu der unmittelbar vor dem Synchronisationszeichen (105) übertragenen ersten Datenfolge (101) zeitlich vorverlagert wird, so dass die zweite Datenfolge (102) unmittelbar auf die vor dem herausgelösten Synchronisationszeichen (105) übertragene erste Datenfolge (101) folgt.

6. Verfahren nach Anspruch 5, **dadurch gekennzeichnet, dass** in der Peripherieeinheit (2) ein gegenüber dem von der Steuereinheit (1) zur Peripherieeinheit (2) übertragenen Datenstrom zeitlich verzögerter weiterer Datenstrom erzeugt wird, der zumindest hinsichtlich vor dem Synchronisationszeichen (105) übertragener Datenfolgen (100a, 101) eine Kopie des erstgenannten Datenstroms darstellt, wobei die zeitliche Verzögerung des weiteren Datenstroms der Dauer des Synchronisationszeichens (105) entspricht und wobei vor dem Erkennen des Synchronisationszeichens (105) in der Peripherieeinheit (2) der zeitlich verzögerte, weitere Datenstrom und nach dem Erkennen des Synchronisationszeichens (105), beginnend mit der zweiten Datenfolge (102), der erstgenannte Datenstrom zur Verarbeitung in der Peripherieeinheit (2) herangezogen wird.

7. Verfahren nach einem der Ansprüche 1 bis 6, **dadurch gekennzeichnet, dass** der nach dem Einfügen des Synchronisationszeichens (105) von der Steuereinheit (1) übertragene verzögerte Datenstrom zurückgesetzt wird, indem wieder der eine Datenstrom an die Peripherieeinheit (2) übertragen wird.

8. Verfahren nach einem der Ansprüche 1 bis 7, **dadurch gekennzeichnet, dass** aus dem nach dem Einfügen des Synchronisationszeichens (105) von der Steuereinheit (1) übertragenen Datenstrom nach dem Senden des Synchronisationszeichens (105) zur Kompensation der Verzögerung ein Pausenzeichen (108) herausgelöst wird.

9. Vorrichtung zum Synchronisieren einer Steuereinheit (1) und mindestens einer Aktoren und/oder Sensoren aufweisenden Peripherieeinheit (2), die über eine serielle Schnittstelle (3) miteinander verbunden sind, wobei die Vorrichtung die Steuereinheit (1) und die Peripherieeinheit (2) aufweist, wobei die Peripherieeinheit (2) eine Verarbeitungseinheit (20) aufweist, mittels der von der Steuereinheit (1) an die Peripherieeinheit (2) übertragene Daten zum Betreiben der Aktoren (22) und/oder Sensoren (23) verarbeitbar sind, und wobei die Steuereinheit (1) zur Synchronisierung mit der Peripherieeinheit (2) eine Zyklussteuerung (14) aufweist, von der die Übertragung mindestens eines Synchronisationszeichens (105) von der Steuereinheit (1) zur Peripherieeinheit (2) veranlassbar ist,
**dadurch gekennzeichnet,**
**dass** aufseiten der Steuereinheit (1) eine Sendeeinheit (40) vorgesehen ist, unter deren Mitwirkung das Synchronisationszeichen (105) an eine erste Datenfolge (101) eines von der Steuereinheit (1) an die Peripherieeinheit (2) zu sendenden Datenstroms anhängbar ist und das Senden einer nach der ersten Datenfolge (101) zu übertragenden zweiten Datenfolge (102) des zu sendenden Datenstroms zeitlich verzögerbar ist, so dass die zweite Datenfolge (102) auf das Synchronisationszeichen (105) folgend von der Steuereinheit (1) an die Peripherieeinheit (2) sendbar ist und dass der Sendeeinheit (40) eine Verzögerungseinheit (42) zur Erzeugung eines gegenüber dem einen Datenstrom verzögerten Datenstromes zugeordnet ist, um die zweite Datenfolge (102) zeitlich verzögert übertragen zu können und dass der Sendeeinheit (40) ein Multiplexer (15) zum Umschalten zwischen dem einen Datenstrom und dem verzögerten Datenstrom zugeordnet ist.

10. Vorrichtung nach Anspruch 9, **dadurch gekennzeichnet, dass** der Multiplexer (15) ferner zum Einfügen des Synchronisationszeichens (105) in den zu sendenden Datenstrom ausgebildet und vorgesehen ist.

11. Vorrichtung nach einem der Ansprüche 9 bis 10, **dadurch gekennzeichnet, dass** die Peripherieeinheit (2) eine Empfangseinheit (51) zum Empfangen von der Sendeeinheit (1) übertragener Daten aufweist und dass der Empfangseinheit (51) eine Verzögerungseinheit (52) zur Erzeugung eines gegenüber dem von der Sendeeinheit (1) eintreffenden Datenstrom verzögerten Datenstromes zugeordnet ist, um das Synchronisationszeichen wieder aus dem Datenstrom herauslösen zu können.

12. Vorrichtung nach einem der Ansprüche 9 bis 11, ausgebildet und vorgesehen zur Durchführung des Verfahrens nach einem der Anspruche 2 bis 5 oder 7 oder 8.

## Claims

1. Method for synchronizing a control unit (1) and at least one peripheral unit (2) having actuators and/or sensors, which units interchange data with one another via a serial interface (3), wherein the control unit (1) sends data to the at least one peripheral unit (2), which data are processed in the peripheral unit (2) to operate the actuators (22) and/or sensors (23), and wherein synchronization is accomplished by virtue of at least one synchronization character (105) being transmitted from the control unit (1) to the peripheral unit (2),
**characterized**
**in that** the synchronization character (105) is added by the control unit (1) to a first data sequence (101) of a data stream that is to be sent from the control unit (1) to the peripheral unit (2) and in that the control unit (1) delays the timing of the sending of a second data sequence (102) of the data stream that is to be sent, which second data sequence is to be transmitted after the first data sequence (101), with the result that the second data sequence (102) is sent from the control unit (1) to the peripheral unit (2) following the synchronization character (105), and in that the second data sequence (102) is delayed by virtue of the control unit (1) generating a further data stream, the timing of which is delayed in comparison with that of the initial data stream that is to be sent to the peripheral unit (2), which further data stream is a copy of the initial data stream at least in respect of data sequences (102, 100b) that follow the first data sequence (101), wherein the delay in the timing of the further data stream corresponds to the duration of the synchronization character (105) and wherein, after the synchronization character (105) is added to the first data sequence (101) of the initial data stream, the data of the delayed, further data stream are then sent to the peripheral unit (2) beginning with the second data sequence (102) - instead of the data of the initial data stream.

2. Method according to Claim 1, **characterized in that** before the synchronization character (105) is inserted into the data stream the first and second data sequences (101, 102) follow one another directly.

3. Method according to either of the preceding claims, **characterized in that** the synchronization character (105) is removed from the data stream by the peripheral unit (2) after a synchronization pulse has been generated on the basis of the synchronization character (105) in order to synchronize the temporal sequences in the peripheral unit (2) with those in the control unit (1).

4. Method according to Claim 3, **characterized in that** instead of the synchronization character (105) the peripheral unit (2) inserts a different character, in particular a pause character (106), into the data stream.

5. Method according to Claim 3, **characterized in that** the peripheral unit (2) brings forward the timing of the second data sequence (102), which follows the synchronization character (105) in the data stream, relative to the first data sequence (101) transmitted directly before the synchronization character (105), with the result that the second data sequence (102) directly follows the first data sequence (101) transmitted before the removed synchronization character (105).

6. Method according to Claim 5, **characterized in that** a further data stream, the timing of which is delayed in comparison with the data stream transmitted from the control unit (1) to the peripheral unit (2), is generated in the peripheral unit (2), which further data stream is a copy, at least in respect of data sequences (100a, 101) transmitted before the synchronization character (105), of the first-mentioned data stream, wherein the delay in the timing of the further data stream corresponds to the duration of the synchronization character (105) and wherein, before detection of the synchronization character (105) in the peripheral unit (2), the further data stream with delayed timing is used and, after detection of the synchronization character (105), beginning with the second data sequence (102), the first-mentioned data stream is used for processing in the peripheral unit (2) .

7. Method according to one of Claims 1 to 6, **characterized in that** the delayed data stream transmitted by the control unit (1) after the insertion of the synchronization character (105) is put back by virtue of the initial data stream being transmitted to the peripheral unit (2) again.

8. Method according to one of Claims 1 to 7, **characterized in that** after the sending of the synchronization character (105) a pause character (108) is removed from the data stream transmitted by the control unit (1) after the insertion of the synchronization character (105) to compensate for the delay.

9. Apparatus for synchronizing a control unit (1) and at least one peripheral unit (2) having actuators and/or sensors, which units are connected to one another via a serial interface (3), wherein the apparatus has the control unit (1) and the peripheral unit (2), wherein the peripheral unit (2) has a processing unit (20) by means of which data transmitted from the control unit (1) to the peripheral unit (2) can be processed to operate the actuators (22) and/or sensors (23), and wherein the control unit (1) has, for the purpose of synchronization with the peripheral unit (2), a cycle controller (14) that can prompt the transmission of at least one synchronization character (105) from the control unit (1) to the peripheral unit (2),
**characterized**
**in that** the control unit (1) has provision for a transmission unit (40), the collaboration of which allows the synchronization character (105) to be added to a first data sequence (101) of a data stream that is to be sent from the control unit (1) to the peripheral unit (2), and allows the timing of the sending of a second data sequence (102) of the data stream that is to be sent, which second data sequence is to be transmitted after the first data sequence (101), to be delayed, with the result that the second data sequence (102) can be sent from the control unit (1) to the peripheral unit (2) following the synchronization character (105), and in that the transmission unit (40) has an assigned delay unit (42) for generating a data stream that is delayed in comparison with the initial data stream, in order to be able to transmit the second data sequence (102) with delayed timing, and in that the transmission unit (40) has an assigned multiplexer (15) for changing over between the initial data stream and the delayed data stream.

10. Apparatus according to Claim 9, **characterized in that** the multiplexer (15) is further designed and intended to insert the synchronization character (105) into the data stream that is to be sent.

11. Apparatus according to either of Claims 9 and 10, **characterized in that** the peripheral unit (2) has a receiving unit (51) for receiving data transmitted by the transmission unit (1) and **in that** the receiving unit (51) has an assigned delay unit (52) for generating a data stream that is delayed in comparison with the data stream arriving from the transmission unit (1), in order to be able to remove the synchronization character from the data stream again.

12. Apparatus according to one of Claims 9 to 11, designed and intended to perform the method according to one of Claims 2 to 5 or 7 or 8.

## Revendications

1. Procédé permettant de synchroniser une unité de commande (1) et au moins une unité périphérique (2) présentant des actionneurs et/ou des capteurs qui échangent des données par une interface série (3), l'unité de commande (1) envoyant à ladite au moins une unité périphérique (2) des données qui sont traitées sur l'unité périphérique (2) pour faire fonctionner les actionneurs (22) et/ou les capteurs (23), et dans lequel, pour la synchronisation, au moins un symbole de synchronisation (105) est transmis de l'unité de commande (1) à l'unité périphérique (2),
**caractérisé en ce que** le symbole de synchronisation (105) est ajouté du côté de l'unité de commande (1) à une première séquence de données (101) d'un flux de données à envoyer par l'unité de commande (1) à l'unité périphérique (2), et **en ce que** du côté de l'unité de commande (1), l'envoi d'une deuxième séquence de données (102) du flux de données à envoyer, à transmettre après la première séquence de données (101), est retardé de sorte que la deuxième séquence de données (102) est envoyée suite au symbole de synchronisation (105) de l'unité de commande (1) à l'unité périphérique (2), et **en ce que**, pour retarder la deuxième séquence de données (102), du côté de l'unité de commande (1), un autre flux de données, retardé par rapport au flux de données à envoyer à l'unité périphérique (2), est généré qui est une copie dudit un flux de données, au moins concernant les séquences de données (102, 100b) suivant la première séquence de données (101), le retard de l'autre flux de données correspondant à la durée du symbole de synchronisation (105), et dans lequel, après l'ajout du symbole de synchronisation (105) à la première séquence de données (101) dudit un flux de données, au lieu des données dudit un flux de données, les données de l'autre flux de données retardé sont désormais envoyées à l'unité périphérique (2) en commençant par la deuxième séquence de données (102).

2. Procédé selon la revendication 1, **caractérisé en ce qu'**avant l'insertion du symbole de synchronisation (105) dans le flux de données, la première et la deuxième séquence de données (101, 102) se succèdent directement.

3. Procédé selon l'une quelconque des revendications précédentes, **caractérisé en ce que** le symbole de synchronisation (105) du côté de l'unité périphérique (2) est extrait du flux de données après qu'une impulsion de synchronisation a été générée sur la base du symbole de synchronisation (105) pour synchroniser les opérations temporelles dans l'unité périphérique (2) avec celles dans l'unité de commande (1).

4. Procédé selon la revendication 3, **caractérisé en ce que** du côté de l'unité périphérique (2), un autre symbole, en particulier un symbole de pause (106), est inséré dans le flux de données au lieu du symbole de synchronisation (105).

5. Procédé selon la revendication 3, **caractérisé en ce que** du côté de l'unité périphérique (2), la deuxième séquence de données (102) suivant le symbole de synchronisation (105) dans le flux de données est avancée dans le temps par rapport à la première séquence de données (101) transmise immédiatement avant le symbole de synchronisation (105) de sorte que la deuxième séquence de données (102) succède immédiatement à la première séquence de données (101) transmise avant le symbole de synchronisation (105) extrait.

6. Procédé selon la revendication 5, **caractérisé en ce que** dans l'unité périphérique (2), un autre flux de données, retardé par rapport au flux de données transmis de l'unité de commande (1) à l'unité périphérique (2), est généré qui est une copie du flux de données mentionné en premier, au moins concernant des séquences de données (100a, 101) transmises avant le symbole de synchronisation (105), le retard de l'autre flux de données correspondant à la durée du symbole de synchronisation (105), et dans lequel, avant la reconnaissance du symbole de synchronisation (105) dans l'unité périphérique (2), l'autre flux de données retardé, et après la reconnaissance du symbole de synchronisation (105), en commençant par la deuxième séquence de données (102), le flux de données mentionné en premier est utilisé pour le traitement dans l'unité périphérique (2).

7. Procédé selon l'une quelconque des revendications 1 à 6, **caractérisé en ce que** le flux de données retardé, transmis par l'unité de commande (1) après l'insertion du symbole de synchronisation (105), est réinitialisé **en ce que** ledit un flux de données est à nouveau transmis à l'unité périphérique (2).

8. Procédé selon l'une quelconque des revendications 1 à 7, **caractérisé en ce qu'**à partir du flux de données transmis par l'unité de commande (1) après l'insertion du symbole de synchronisation (105), après l'envoi du symbole de synchronisation (105), un symbole de pause (108) est extrait pour compenser le retard.

9. Dispositif permettant de synchroniser une unité de commande (1) et au moins une unité périphérique (2) présentant des actionneurs et/ou des capteurs qui sont reliés les uns aux autres par une interface série (3), le dispositif présentant l'unité de commande (1) et l'unité périphérique (2), l'unité périphérique (2) présentant une unité de traitement (20) au moyen de laquelle des données transmises de l'unité de commande (1) à l'unité périphérique (2) peuvent être traitées pour faire fonctionner les actionneurs (22) et/ou les capteurs (23), et dans lequel l'unité de commande (1) présente pour la synchronisation avec l'unité périphérique (2) une commande de cycle (14) à partir de laquelle la transmission d'au moins un symbole de synchronisation (105) de l'unité de commande (1) à l'unité périphérique (2) peut être provoquée,
**caractérisé en ce que** du côté de l'unité de commande (1), une unité d'émission (40) est prévue en collaboration avec laquelle le symbole de synchronisation (105) peut être ajouté à une première séquence de données (101) d'un flux de données à envoyer de l'unité de commande (1) à l'unité périphérique (2), et l'envoi d'une deuxième séquence (102) de données du flux de données à envoyer, à transmettre après la première séquence de données (101), peut être retardé de sorte que la deuxième séquence de données (102) peut être envoyée de l'unité de commande (1) à l'unité périphérique (2) suite au symbole de synchronisation (105), et **en ce que** l'unité d'émission (40) est associée à une unité de retard (42) pour générer un flux de données retardé par rapport audit un flux de données afin de pouvoir transmettre la deuxième séquence de données (102) de manière retardée, et **en ce que** l'unité d'émission (40) est associée à un multiplexeur (15) pour commuter entre ledit un flux de données et le flux de données retardé.

10. Dispositif selon la revendication 9, **caractérisé en ce que** le multiplexeur (15) est en outre réalisé et prévu pour insérer le symbole de synchronisation (105) dans le flux de données à envoyer.

11. Dispositif selon l'une quelconque des revendications 9 et 10, **caractérisé en ce que** l'unité périphérique (2) présente une unité de réception (51) pour recevoir des données transmises par l'unité d'émission (1), et **en ce que** l'unité de réception (51) est associée à une unité de retard (52) pour générer un flux de données retardé par rapport au flux de données arrivant de l'unité d'émission (1) afin de pouvoir à nouveau extraire le symbole de synchronisation du flux de données.

12. Dispositif selon l'une quelconque des revendications 9 à 11, réalisé et prévu pour l'exécution du procédé selon l'une quelconque des revendications 2 à 5 ou 7 ou 8.
